# EUROPÄISCHE PATENTANMELDUNG

(11) **EP 0 529 508 A2**
(43) Veröffentlichungstag der Anmeldung: **03.03.1993**
(21) Anmeldenummer: 92114179.2
(22) Anmeldetag: 20.08.1992
(51) Int. Cl.: B23B 31/02, B23B 31/36

(54) **Werkzeug-Spanndorn**

(30) Priorität: 22.08.1991 DE 4127770
(71) Anmelder: KELCH GMBH + CO., D-73614 Schorndorf (DE)
(72) Erfinder: Kelch, Wolfgang, W-7060 Schorndorf (DE); Zaiser, Helmar, W-7012 Fellbach (DE)
(74) Vertreter: Patentanwälte Ruff, Beier, Schöndorf und Mütschele

(57) **Zusammenfassung**

Der Spanndorn (1) weist zwei gesonderte Halter (2, 3) einerseits zur Befestigung an einer Maschinenspindel und andererseits zur Aufnahme eines Werkzeugeinsatzes auf und diese beiden Halter (2, 3) sind quer zu ihren Längsachsen (10, 11) gegeneinander mit einer Führung (9) bewegbar sowie mit einer Stelleinrichtung (8) im Mikrobereich verstellbar und festsetzbar, so daß Rundlauffehler des Werkzeugeinsatzes korrigiert werden können. Die Führungsflächen (13, 14) der Führung (9) sind durch eine axiale Spanneinrichtung (12) unter hohe Preßspannung gesetzt, so daß sich in allen Richtungen eine völlig spielfreie Verstellung ergibt. Ein Fluidkanal (3) für eine Bearbeitungsflüssigkeit durchsetzt beide Halter (2, 3).

## Beschreibung

Die Erfindung betrifft einen Spanndorn, der insbesondere für solche Werkzeuge geeignet ist, welche durch ihre Arbeit, z. B. eine Zerspanungs- oder Verformungsarbeit, wesentlich höheren Belastungen als z. B. Tastbelastungen als Meßwerkzeugen ausgesetzt ist.

Der Spanndorn weist zweckmäßig zur Befestigung an der Arbeitsspindel einer Werkzeugmaschine o. dgl. einen Spindel-Halter, z. B. einen Außenkonus, einen Pinolendorn o. dgl. auf und hat zur Aufnahme eines Werkzeugeinsatzes einen Werkzeug-Halter, an dem der Werkzeugeinsatz lös- bzw. auswechselbar oder unlösbar befestigt ist. Der Spindel-Halter und der Werkzeug-Halter definieren eine Längsachse, die als Arbeits- bzw. Drehachse den Rundlauf des Werkzeugeinsatzes insofern bestimmt, als diese Längsachse möglichst achsgleich zur Drehachse der Arbeitsspindel ausgerichtet sein oder eine demgegenüber genau abweichende Lage einnehmen soll.

Der Rundlauf oder Schlag eines über eine Arbeitsspindel frei vorstehenden Arbeitsbereiches eines Werkzeuges liegt meist in der Größenordnung weit unterhalb 1/10tel mm bzw. im Bereich von 100stel oder 1000stel mm und entsprechend schwierig ist eine Korrektur dieses unrunden Laufes, weil sie einer äußerst feinfühligen Verstellung in extrem kleinen Stellschritten bedarf. Man kann zwar versuchen, durch wiederholt relativ verdrehtes Einspannen des Spanndornes in der Arbeitsspindel eine Stellung zu finden, in der der Rundlauf innerhalb der geforderten Toleranz liegt, jedoch führt dies meist nicht zu befriedigenden Ergebnissen und außerdem ist ein solches Verfahren sehr zeitaufwendig.

Der Erfindung liegt des weiteren die Aufgabe zugrunde, einen Werkzeug-Spanndorn zu schaffen, bei dem Nachteile bekannter Ausbildungen bzw. die beschriebenen Nachteile vermieden sind und der insbesondere im in eine Arbeitsspindel eingespannten Zustand eine hinreichend genaue Rundlaufkorrektur ermöglicht.

Zur Lösung dieser Aufgabe sind Mittel vorgesehen, um den Werkzeug-Halter hinsichtlich der Lage seiner Längsachse gegenüber der Längsachse des Spindel-Halters, insbesondere in den genannten feinsten Stellschritten, zu verstellen und in der eingestellten Lage die beiden Halter so gegeneinander zu sichern, daß sie aufgrund der betriebsbedingt auftretenden hohen Arbeitsbelastungen nicht weiter gegeneinander verstellt werden können, sondern unverrückbar fest miteinander verbunden sind. Dadurch kann der Werkzeug-Halter genau fluchtend zur Arbeitsspindel ausgerichtet werden, unabhängig davon, wie genau die Arbeitsspindel den Spindel-Halter hinsichtlich der Achslage aufnimmt. Diese Verstellung kann eine Kipp-Verstellung und/oder be- vorzugt eine streng achsparallele Verstellung sein, so daß alle möglichen Lagerabweichungen korrigiert werden können.

Zwar können die beiden Halter im wesentlichen starr aneinander befestigt sein bzw. einteilig ineinander übergehen und wenigstens zum Teil durch Verformung wenigstens eines entsprechenden Dornabschnittes gegeneinander verstellbar sein, jedoch ergibt sich eine besonders günstige und kompakte Ausbildung bei hoher Präzision gegeneinander zu bewegender Teile, wenn beide Halter durch gesonderte Bauteile gebildet sind, die z. B. über eine Ebenen-Führung aneinander geführt sind. Die beiden Halter können nach Art eine Kreuzschlittens in zwei zueinander und/oder zur Längsachse mindestens eines Halters etwa rechtwinkligen Richtungen gegeneinander verstellbar sein, wobei für die beiden Richtungen zweckmäßig nicht gesonderte Führungen, sondern eine einzige Führung, nämlich z. B. eine Planführung vorgesehen ist, die Bewegungen in allen Richtungen parallel zu einer Ebene ermöglicht, ansonsten jedoch keinerlei weitere Relativbewegungen zuläßt.

Zur Verstellung ist vorteilhaft mindestens ein Stelltrieb vorgesehen, der in besonders einfacher Weise durch eine einzige Stellschraube bzw. Spindel mit einem Feingewinde o. dgl. gebildet sein kann, die etwa radial zu mindestens einer Längsachse liegt sowie in einem Halter mit Gewinde geführt ist und am anderen Halter mit einer stirnseitigen Druckfläche anliegt. Dadurch sind feinste Stellbewegungen möglich und der jeweilige Stelltrieb wirkt in jeder Einstellung derart selbstsichernd, daß ohne zusätzliche Maßnahmen eine starre Festsetzung der Einstellage gegeben ist. Zweckmäßig greifen jeweils zwei Stelltriebe etwa in einer gemeinsamen Axialebene mindestens einer Längsachse und/oder annähernd achsgleich an einem oder beiden Haltern an, so daß diese beiden Stelltriebe nach Art einer Radialspannung entgegengesetzt wirken können und eventuelles Spiel ihrer Stellglieder durch gegenseitige Verspannung sowie Verspannung gegenüber den Haltern eliminieren. Außerdem kann dadurch allein durch die Anordnung von zwei Paaren von Stelltrieben die Verstellbarkeit in zwei zueinander quer liegenden Richtungen erreicht werden, die auch die Verstellung in allen übrigen Richtungen ermöglicht.

Damit die jeweilige Einstellung der beiden Halter gegeneinander nicht zu sonstigen Lageveränderungen zwischen den Haltern führt und am Ende des Einstellvorganges ohne jegliches weiteres Zutun starr gesichert ist, ist es zweckmäßig, wenn die gegeneinander bzw. aneinander bewegbaren Flächen der Führung unter sehr hoher Normalspannung gegeneinander gepreßt sind, nämlich insbesondere in Richtung der Längsachse gegeneinander mit einer Kraft verspannt sind, die wesentlich höher als alle bei der Arbeit mit dem Werkzeug auf die Führung wirkenden Kräfte sind. Diese Verspannung kann durch ein Federglied mit extrem steiler, nämliche wenige Winkelgrade von der Vertikalen abweichender Federkennlinie erzeugt sein, wie es z. B. durch einen Streck-Zugstab, ein Tellerfederpaket o. dgl. gebildet sein kann. Diese Spannung ist vorteilhaft von der Außenseite des Werkzeuges insbesondere auch dann nachstellbar, wenn das Werkzeug in die Arbeitsspindel eingespannt ist. Ferner ist es zweckmäßig, wenn die Spannkraft außer parallel zu mindestens einer Längsachse auch stufenlos um wenige Winkelgrade abweichend davon gerichtet werden kann, wofür z. B. vier paarweise einander gegenüberliegende, unabhängig voneinander betätigbare Spannglieder vorgesehen sein können, die um die Längsachse verteilt und vom Außenumfang des Spanndornes her jederzeit zugänglich sind. Vorteilhaft kann die Spanneinrichtung mit einer Grobeinstellung, z. B. einer etwa in der Längsachse liegenden Gewindeverbindung zwischen dem Feder- bzw. Zugglied und einem Halter, eingestellt werden, wonach die Spannung mit dem unabhängig davon geführten Spannglied fein eingestellt bzw. nachgestellt werden kann. Das Spannglied wirkt hierfür unmittelbar auf das Federglied.

Um möglichst geringe Kippkräfte zu gewährleisten, liegt der jeweilige Stelltrieb unmittelbar benachbart zur Führung und von dieser vorteilhaft in einem Axialabstand, der nur so groß ist, daß zwischen der Führung und dem Stelltrieb ausreichend feste Materialquerschnitte zur Lagerung des Stelltriebes gegeben sind. Dadurch wirkt der Stelltrieb nahezu in der Ebene der Führung. Mit entsprechend geringem Abstand von dem Stelltrieb kann auch das jeweilige Spannglied vorgesehen sein, das zweckmäßig unter einem Winkel von etwa 45° zur Längsachse wirkt. Jeweils ein Spannglied liegt zweckmäßig etwa in derselben Axialebene der Längsachse wie ein Stellglied, so daß beide Glieder jederzeit vom Außenumfang des Spanndornes her zugänglich sind, jedoch im wesentlich versenkt innerhalb des Außenumfanges des Spanndornes liegen.

Der Spanndorn kann auch mit einer Fluidführung zur Versorgung des Schneid- bzw. Zerspanungsbereiches mit einer Schneid- oder Kühlflüssigkeit versehen sein, wobei die Fluidführung zweckmäßig vom spindelseitigen Ende des Spanndornes durch beide Halter zum Bereich des Werkzeugeinsatzes führt und im Bereich eines Trennspaltes zwischen den beiden Haltern zwei aneinanderschließende Kanalabschnitte aufweist. Dieser Trennspalt kann durch die aneinanderliegenden Gleitflächen der Führung und/oder durch einen Hüllspalt gebildet sein und ist beiderseits der Verbindungszone zwischen den beiden Kanalabschnitten abgedichtet, so daß eine flüssigkeitsführende, dichte Hohlkammer gebildet ist. Eine dieser Dichtungen ist zweckmäßig ohne zusätzliche elastische Dichtungskörper unmittelbar durch die Gleitflächen gebildet, die somit durch die meist ölhaltige Flüssigkeit mit einer Schmierung versorgt sind. Eine das andere Ende des Hohlraumes verschließende Abdichtung kann durch einen Dichtring zwischen einer Außen- und einer Innenumfangsfläche der beiden Halter gebildet sein.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. In den Zeichnungen zeigen:
- Fig. 1: einen erfindungsgemäßen Werkzeug-Spanndorn im wewesentlichen im Axialschnitt und
- Fig. 2 bis 5: weitere Ausführungsformen in Darstellungen entsprechend Fig. 1.

Der Spanndorn 1 besteht im wesentlichen aus zwei seinen Außenumfang in axial aufeinanderfolgenden Bereichen bestimmenden Haltern 2, 3, die einander zur Zentrierung in Achsrichtung über eine Länge übergreifen, die kleiner als ihre kleinste Außenweite ist. Der zur Befestigung des Spanndornes 1 an einer Arbeitsspindel dienende Spindel-Halter 2 weist als Zentrierfläche 4 zur Ausrichtung gegenüber der Maschinenspindel einen Spitzkonus auf, welcher mit einem von seiner hinteren Endfläche zugänglichen Spann-Angriffsglied 5, nämlich einer Gewinde-Sacklochbohrung, für den zerstörungsfrei lösbaren Eingriff einer Zugstange versehen ist, die in der hohlen Arbeitsspindel liegt und mit welcher die Zentrierfläche 4 in einen genau angepaßten Innenkonus der Arbeitsspindel festsitzend hineingezogen werden kann. Im Anschluß an die Zentrierfläche 4 weist der Halter 2 einen über seinen Außenumfang vorstehenden, ringscheibenförmigen Bund 6 auf, wie er z. B. dafür zweckmäßig ist, daß der Spanndorn 1 einschließlich eines eingesetzten Werkzeugeinsatzes mit einer Werkzeugwechsel-Vorrichtung automatisch zwischen seiner Arbeitslage an der Arbeitsspindel und einer Speicherlage in einem Werkzeugmagazin überführt werden kann. Dieser Bund 6 ist zweckmäßig mit mindestens zwei einander gegenüberliegenden Axialnuten für den Eingriff von Nutensteinen der Arbeitsspindel versehen, die eine drehschlüssige Verbindung gewährleisten.

Der an die vordere Endfläche des Halters 2 anschließende Werkzeug-Halter 3 liegt vollständig innerhalb der Hüllfläche des Außenumfanges des Bundes 6 und kann wesentlich kürzer als der Halter 2 sein. Der Halter 3 weist eine von seiner vorderen Endfläche her zugängliche Werkzeugaufnahme 7 in Form einer zentralen Bohrung auf, die zweckmäßig durch einen erweiterten Abschnitt einer Durchgangsbohrung gebildet ist und in welchen ein Werkzeugeinsatz mit einem eng angepaßten Schaft im wesentlichen spielfrei zentriert, eingesetzt sowie durch Verspannen axial und/oder in Drehrichtung gesichert werden kann. Der Werkzeugeinsatz bzw. dessen Schaft kann aber auch einteilig mit dem Halter 3 ausgebildet sein.

Die beiden Halter 2, 3 sind durch eine Stelleinrichtung 8 ausschließlich rechtwinklig zu ihren Längsachsen 10, 11 gegeneinander im Mikrobereich verstellbar und hierzu durch eine Gleit-Führung 9 quer zur Verstellebene spielfrei aneinander geführt. Die Spielfreiheit, auch während des Verstellens, wird durch eine Spanneinrichtung 12 erreicht, welche die Gleitfläche 13, 14 der Führung 9 in Richtung der Längsachsen 10, 11 annähernd rechtwinklig gegeneinander preßt. Die beiden Gleitflächen 13, 14 sind durch annähernd gleich große, zu den Längsachsen 10, 11 ringförmig konzentrische und genau plane Ringfläche gebildet und reichen bis zum Außenumfang des Spanndornes, so daß die beiden Halter 2, 3 in diesem Bereich annähernd spaltfrei ineinander übergehen können und ein Eindringen von Schmutz zwischen die Gleitflächen 13, 14 vermieden ist.

Zur gegenseitigen Zentrierung der Halter 2, 3 sowie zur Aufnahme der Spanneinrichtung 12 bildet der Halter 2 eine bei abgenommenem Halter 3 von seiner vorderen Endfläche her zugängliche Kammer 15, die durch eine über ihre Länge durchgehend im wesentlich konstant weite Sacklochbohrung gebildet ist, welche den Innenumfang der zugehörigen Gleitfläche 13 begrenzt und bis in den Bereich der hinteren Stirnfläche des Bundes 6 reicht. In diese Kammer 15 greift der Halter 3 mit einem gegenüber seinem äußeren Abschnitt in der Weite und/oder Länge reduzierten Abschnitt 16 ein, dessen Länge kürzer als die Hälfte der Länge der Kammer 15 ist und dessen größter, durch einen radial vorstehenden Endbund definierter Außenumfang mit geringem Radialspiel dem Innenumfang der Kammer 15 gegenüberliegt. In eine Umfangsnut im Endbund ist eine ringförmige Dichtung 17 eingesetzt, welche unter Pressung am Innenumfang der Kammer 15 anliegt und eine unmittelbare metallische Berührung zwischen dem einteilig mit dem übrigen Halter 3 ausgebildeten Abschnitt 16 und dem Halter 2 selbst dann verhindert, wenn die beiden Halter 2, 3 nicht gegeneinander verspannt sind, sondern durch Lockerung der Stelleinrichtung bzw. einer axialen Spanneinrichtung Bewegungsspiel gegeneinander haben. Die Dichtung 17 bildet dadurch eine federnde bzw. elastische Zentrierung der beiden Halter 2, 3 gegeneinander. Der Abschnitt 16 steht nach Art eines Kerndornes über die zugehörige Gleitfläche 15 axial vor und bildet einen zerstörungsfrei abnehmbaren Verschlußdeckel für die Kammer 15.

In die Kammer 15 greift ein Zuganker 18 mit Radialspiel zentriert ein, dessen größte Außenweite etwa gleich wie die des Endbundes des Abschnittes 16 sein kann und der mit einem Gewinde-Schaft 19 in eine in der Längsachse 11 liegende Gewindebohrung des Abschnittes 16 des Halters 3 eingreift. Diese Gewindebohrung bildet den Endabschnitt der Durchgangsbohrung für die Werkzeugaufnahme 7 und ist gegenüber dieser wesentlich kürzer, so daß sie vollständig innerhalb der Kammer 15 liegt. An einem gegenüber dem Schaft 19 wesentlich weiteren und mit einer zylindrischen Umfangsfläche den weitesten Außenumfang des Zugankers 18 definierenden Kopf 21 bildet der Zuganker 18 vier gleichmäßig über seinen Umfang verteilte ebene Druckflächen 20, die jeweils unter einem Winkel von etwa 45° schräg zur Längsachse 11 und an der dem Schaft 19 zugekehrten Stirnseite des Kopfes 21 liegen.

Jeder Druckfläche 20 ist ein am Halter 2 gelagertes Spannglied 22 in Form einer vollständig innerhalb von dessen Außenumfang versenkt liegenden Stiftschraube zugeordnet, die mit der planen Endfläche eines End-Schaftes 23 ganzflächig an der zugehörigen planen Druckfläche 20 anliegt und mit einem gegenüber dem Schaft 23 wenigstens um das Doppelte der Gewindetiefe erweiterten Gewindekopf 24 in einer Gewindebohrung 25 des Halters 2 geführt ist. Die Gewindebohrung 25 dringt unmittelbar benachbart zur vorderen Stirnfläche des Bundes 6 in den Außenumfang des Halters 2 ein und reicht über den größten Teil der Axialerstreckung des Bundes 6, da sie entsprechend der jeweiligen Druckfläche 20 schräg zur Längsachse 10 bzw. 11, jedoch in einer Axialebene dieser Längsachse liegt. Die Druckflächen 20 bzw. der Kopf 21 liegen wie ein größter Längsabschnitt der jeweiligen Gewindebohrung 25 zwischen den Stirnflächen des Bundes 6 und damit im Bereich größter Festigkeit des Halters 2. Das äußere Ende der Gewindebohrung 25 kann im Bereich eines kegelstumpfförmig an die vordere Stirnfläche des Bundes 6 anschließenden Abschnittes des Außenumfanges des Halters 2 so vorgesehen sein, daß eine Mittelachse im Axialschnitt rechtwinklig zur Mantelfläche dieses Abschnittes liegt.

In der äußeren Stirnfläche des Gewindekopfes 24 ist zweckmäßig ein Werkzeug-Eingriffsglied, z. B. ein Innensechskant vorgesehen, so daß das Spannglied 22 zur Betätigung mit diesem Werkzeug jederzeit in Eingriff gebracht werden kann. Alle vier Spannglieder 22 können unabhängig voneinander betätigt werden und mit ihnen kann die Gleitfläche 15 unter hoher Druckkraft gegen die Gleitfläche 13 gezogen werden, wobei der Schaft 19 im elastischen Bereich geringfügig gestreckt werden kann und daher als Spannfeder wirkt. Der Durchmesser des Schaftes 19 ist mehrfach, z. B. etwa vierfach kleiner als der größte Durchmesser des Kopfes 21.

Zumindest im Bereich des Außenumfanges axial unmittelbar benachbart zu den Spanngliedern 22 weist die Stelleinrichtung 8 jeweils einen Stelltrieb 26 auf, der axial zwischen der Führung 9 und dem jeweiligen Spannglied 22 liegt sowie von beiden jeweils einen Abstand hat, der kleiner als seine Erstreckung in Richtung der Längsachse 10, 11 ist. Jeder Stelltrieb 26 liegt in einer gemeinsamen Axialebene der Längsachse 10, 11 mit einem zugehörigen Spannglied 22, so daß sich vier gleichmäßig über den Umfang verteilte Stelltriebe 26 mit jeweils zwei einander diametral und achsgleich gegenüberliegenden Stellgliedern 27 in Form von Stiftschrauben ergeben, die vollständig versenkt innerhalb des Außenumfangs des Spanndorns 1 vorgesehen sind und jeweils in eine radiale Gewindebohrung 28 des Halters 2 eingreifen. Diese Gewindebohrung 28 liegt unmittelbar benachbart zur Gleitfläche 13 und von dieser mit einem Abstand, der kleiner als ihr Durchmesser bzw. die Hälfte davon ist, so daß der Außenumfang des Stellgliedes 27 die Gleitfläche 13 annähernd tangential berührt.

Jedes Stellglied 27 liegt mit einer inneren, planen End- bzw. Stirnfläche annähernd ganzflächig an einer von vier Planflächen des Halters 3 an, die als Druckfläche 29 vom im wesentlichen zylindrischen Endbund des Abschnittes 16 bis unmittelbar benachbart zur Gleitfläche 14 reicht, so daß der Abschnitt 16 in diesem Bereich nach Art eines Vierkantes mit abgerundeten Eckbereichen ausgebildet ist. Durch diesen Eingriff der Stellglieder 27 sind die ansonsten gegeneinander verdrehbaren Halter 2, 3 auch gegeneinander starr verdrehgesichert, so daß weitere Mittel zur Verdrehsicherung nicht erforderlich sind und sich die beiden Halter 2, 3 beim Spannen der Stellglieder 27 gegeneinander um ihre Längsachsen 10, 11 von selbst genau ausrichten können.

Jedes Stellglied 27 wirkt als Spannglied gegen ein gegenüberliegendes Stellglied 27 und weist zur Betätigung an seinem äußeren Ende ein Werkzeug-Eingriffsglied, z. B. der beschriebenen Art, auf, so daß durch Anziehen und Lockern eines, mehrerer oder aller Stellglieder 27 feinste relative Stellbewegungen zwischen den Haltern 2, 3 hervorgerufen werden können, bei welchen die Halter 2, 3 mit den Gleitflächen 13, 14 aneinander gleiten, jedoch durch die Führung 8 und die Spanneinrichtung 12 streng in ihrer achsparallelen Ausrichtung gesichert werden. Führt z. B. der Eingriff der Zentrierfläche 4 in die Arbeitsspindel aufgrund von Toleranzen oder anderen Ungenauigkeiten nicht zu einer exakten Fluchtung der Längsachse 11 des Halters 3 bzw. des Werkzeugeinsatzes mit der Drehachse der Arbeitsspindel, so kann dieser Fluchtungsfehler, z. B. mit Hilfe einer an der äußeren Umfangsfläche 34 des Halters 3 tastenden Meßuhr durch die Stelleinrichtung 8 korrigiert werden.

Die Umfangsfläche 34 des Halters 3 weist zweckmäßig im Anschluß an die Gleitfläche 14 gleichen Außendurchmesser wie die äußere Umfangsfläche 39 des Halters 2 im Anschluß an die Gleitfläche 13 auf, so daß beide Flächen als Tast- bzw. Meßbezugsflächen gleichen Radialabstandes von der jeweils zugehörigen Längsachse 11 bzw. 10 verwendet werden können und somit auch eventuelle Fluchtungsfehler als absolutes Maß genau bestimmt werden können. Vorteilhaft sind die Umfangsflächen 33, 34 wenigstens in den genannten Bereichen zylindrisch und als fein- bzw. feinstbearbeitete Flächen, z. B. als geschliffene Flächen aus gehärtetem Stahl, ausgebildet.

Zur Versorgung des Arbeitsbereiches des den Spanndorn 1 aufweisenden Werkzeuges ist zweckmäßig ein Fluidkanal 30 vorgesehen, welcher einen Kanalabschnitt 31 im Halter 2 und einen Kanalabschnitt 32 im Halter 3 aufweist sowie in das innere Ende der Werkzeugaufnahme 7 etwa radial mündet. Der an eine maschinenseitige Fluidleitung anzuschließende Kanalabschnitt 31 geht von der hinteren Stirnfläche des Bundes 6 aus und verläuft schräg zur Längsachse 10 von diesem zum Innenumfang der Kammer 15, an dem er unmittelbar benachbart zur Gleitfläche 13 zwischen der Dichtung 17 und dieser Gleitfläche 13 austritt. Der wesentlich kürzere und etwa radiale Kanalabschnitt 32 durchsetzt den hohlen Abschnitt 16 unmittelbar benachbart zur Gleitfläche 14, hat geringere Durchflußquerschnitte als der Kanalabschnitt 31 und ist gegenüber der Mitte von dessen Austrittsöffnung zur Führung 8 bzw. Gleitfläche 14 hin versetzt. Das radial innere Ende des Kanalabschnittes 32 mündet in einen geringfügig erweiterten und im Bodenbereich von der Gewindebohrung für den Schaft 19 durchsetzten Abschnitt der Werkzeugaufnahme 7, so daß der Schaft des Werkzeugeinsatzes den Kanalabschnitt 32 auch dann nicht verschließen kann, wenn er an dieser Bodenfläche anschlägt. Ein oder zwei Spannglieder 22 bzw. Stellglieder 26 liegen zweckmäßig in einer gemeinsamen Axialebene mit einer zugehörigen Axialnut des Bundes 6, während der Kanalabschnitt 31 zweckmäßig demgegenüber um die Längsachse 10 etwa um 45■ versetzt ist. Zur Sicherung des Werkzeugeinsatzes gegenüber dem Halter 3 ist in dessen Mantel mindestens ein Festsetzglied 35, z. B. in einer Gewindebohrung eine radiale Spannschraube, gelagert, welche gegen den Schaft des Werkzeugeinsatzes gespannt werden kann.

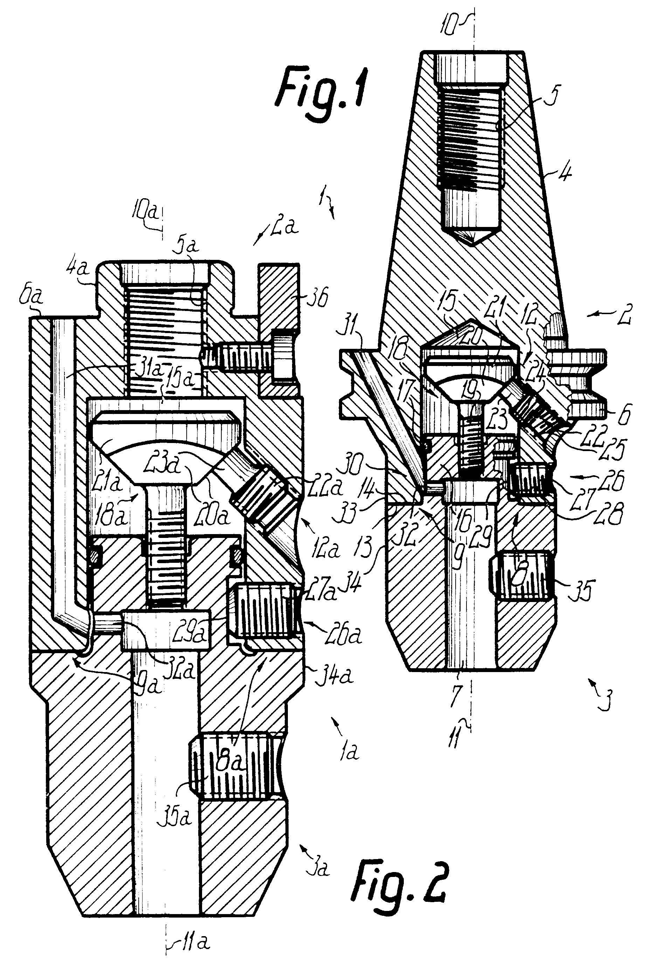

In den Figuren 2 bis 5 sind für einander entsprechende Teile die gleichen Bezugszeichen wie in Fig. 1, jedoch mit unterschiedlichen Buchstaben-Indizes, verwendet, weshalb alle Beschreibungsteile sinngemäß für alle Ausführungsformen gelten, wobei die unterschiedlichen Ausbildungen der Ausführungsformen in beliebiger Kombination in einer einzigen Ausführungsform vorgesehen sein können.

Gemäß Fig. 2 ist der Halter 2a zur Ausrichtung gegenüber der Arbeitsspindel mit einer stirnseitig ringförmigen Planfläche 6a am hinteren Ende versehen, über die ein im Durchmesser reduzierter, zylindrischer Vorsprung mit einer zylindrischen Zentrierfläche 4a am Außenumfang vorsteht. Im Bereich des Außenumfanges weist der die Planfläche 6a bildende Halterabschnitt eine vertiefte Tasche zur Aufnahme eines Mitnehmers 36 auf, der im Radialabstand benachbart zur Zentrierfläche 4a frei nach hinten ausragt und zum drehschlüssigen Eingriff in die Arbeitsspindel dient. Der Halter 2a ist über seine ganze Länge durchgehend hohl ausgebildet, wobei das Eingriffsglied 5a in die Bodenfläche der Kammer 15a übergeht, so daß der Kopf 21a des Zugankers 18a gegebenenfalls vom hinteren Ende des von der Arbeitsspindel entfernten Spanndornes 1a her durch das Eingriffsglied 5a hindurch zur Betätigung bzw. Grobeinstellung zugänglich ist. Der Kanalabschnitt 31a liegt etwa achsparallel zum Halter 2a zwischen dessen Außenumfang und dem Innenumfang der Kammer 15a und geht von der Planfläche 6a aus.

Axial unmittelbar benachbart zur Umfangsfläche 34a, die sehr kurz ist und nicht bis zum Festsetzglied 35a reicht, geht der Halter 3a in einen in der Außenweite reduzierten Abschnitt über, der wie der Halter 3 am vorderen Ende spitzwinklig konisch verjüngt ist. Von der Planfläche 6a weist der Spanndorn 1a bis zum vorderen Ende der Umfangsfläche 34a durchgehend im wesentlichen konstante Außenquerschnitte auf, welche lediglich von den Gewindebohrungen durchsetzt sind.

Der Halter 2b des Spanndornes 1b gemäß Fig. 3 ist ähnlich demjenigen nach Fig. 2 ausgebildet, jedoch weist die Kammer 15b zwei axial aneinanderschließende Abschnitte unterschiedlicher Weite auf. In den weiteren, an die Führung 9b anschließenden Abschnitt greift der Abschnitt 16b des Halters 3b annähernd voll ausfüllend ein, während in dem engeren, an das Eingriffsglied 5b anschließenden Abschnitt der Kopf 21b im wesentlichen radialspielfrei geführt ist. Dieser Kopf 21b ist durch einen vom Schaft 19b des Zugankers 18b gesonderten Bauteil gebildet, in dessen Gewindebohrung der Schaft 19b mit einem an seinem hinteren Ende vorgesehenen Gewindeabschnitt eingreift. Das hintere Ende des Kopfes 21b ist mit einem Werkzeug-Eingriffsglied, z. B. mit einem Diametralschlitz versehen, so daß es durch das Eingriffsglied 5b von der Außenseite des Spanndornes 1b her zur Verstellung der axialen Relativlage zwischen den Druckflächen 20b und dem Halter 3b gedreht werden kann. Es können dabei mehr Druckflächen 20b als Spannglieder 22b gleichmäßig um die Längsachse so verteilt sein, daß der Zuganker 18b in verhältnismäßig kleinen Schritten verstellt werden kann oder aber können die Druckflächen 20b zur stufenlosen Verstellung durch eine kegelstumpfförmige Umfangsfläche gebildet sein, an welcher die Spannglieder 22b dann punktförmig anliegen.

Am anderen, vorderen Ende weist der Schaft 19b einen erweiterten Kopf 37 auf, der mit einer kegelstumpfförmig an den Schaft 19b anschließenden Stirnfläche an einer Ringschulter eines erweiterten Endabschnittes einer gewindefreien Durchgangsbohrung des Abschnittes 16b abgestützt ist und dadurch die Gleitflächen der Führung 9b gegeneinander zieht. Die Werkzeugaufnahme 7b ist in diesem Fall durch einen spitzwinkligen Innenkonus gebildet, während das Festsetzglied 35b durch eine Schraubkappe gebildet ist, welche auf ein Außengewinde des vorderen Endabschnittes des Halters 3b aufgeschraubt ist und im Bereich ihrer Stirnwand einen stumpfwinkligen Innenkonus zur Anlage an einem entsprechenden Außenkonus des Werkzeugeinsatzes aufweist, so daß dieser mit dem Festsetzglied 35b in die Werkzeugaufnahme 7b gespannt werden kann.

Der Kanalabschnitt 31b durchsetzt hier die Gleitfläche 13b mit Abstand zwischen ihren inneren und äußeren Umfangsbegrenzungen sowie näher bei der inneren Umfangsbegrenzung und in entsprechender Weise durchsetzt der Kanalabschnitt 32b die Gleitfläche 14b der Führung 9b. Zumindest radial außerhalb dieser Durchsetzungsbereiche bilden die Gleitflächen 13b, 14b metallisch aneinanderliegende Dichtflächen, durch die ein Austreten von Flüssigkeit aus dem Fluidkanal 30b im Bereich der Führung 9b zum Außenumfang des Spanndornes 1b hin vermieden ist.

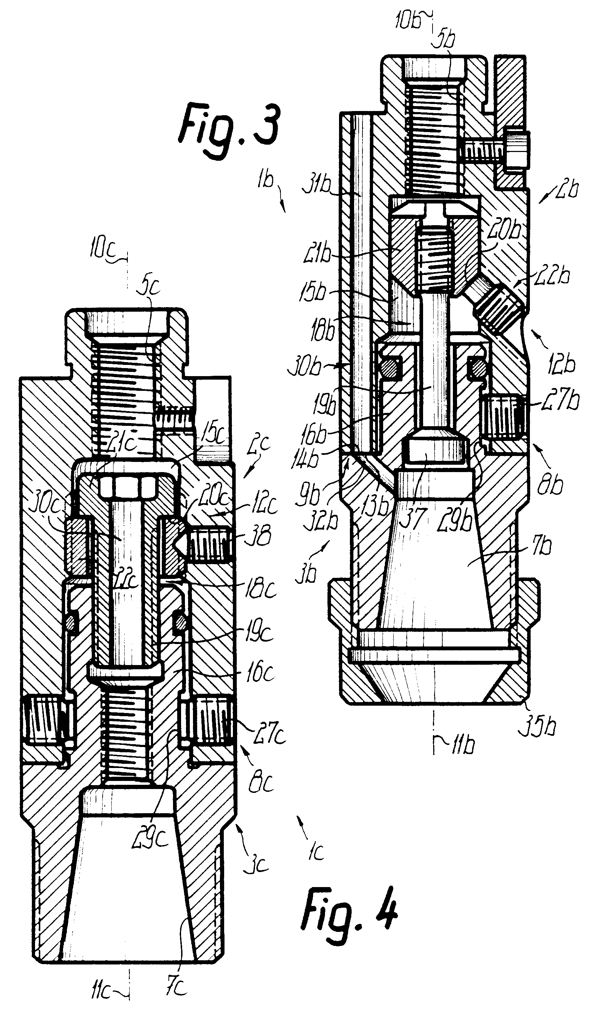

Der Spanndorn 1c gemäß Fig. 4 weist einen hülsenförmig hohlen Zuganker 18c auf, dessen Kopf 21c mit einer ringförmig planen, an den Schaft 19c anschließenden Druckfläche 20c an einem ringförmigen Spannglied 22c abgestützt ist, welche annähernd achsgleich zum Zuganker 18c liegt und mit einem Außengewinde in einem Innengewinde des engeren Abschnittes der Kammer 15c geführt ist. Das Spannglied 22c ist mit einem etwa radial in Halter 2c in einer Gewindebohrung geführten Sicherungsglied 38, z. B. einer versenkten Stiftschraube, in seiner Drehlage gesichert, die mit einem kegelförmigen Ende in eine entsprechende Vertiefung am Außenumfang des Spanngliedes 22c eingreift. Über den Umfang des Spanngliedes 22c kann eine Mehrzahl solcher Vertiefungen verteilt vorgesehen sein und der Kegelwinkel des Eingriffes des Sicherungsgliedes 38 kann derart sein, daß eine Erhöhung der Spannung des Sicherungsgliedes 38 zu einer Drehbewegung des Spanngliedes 22c und damit zum Nachstellen der Spannung führt.

Hierzu kann der Zuganker 18c aber auch am hinteren Ende seiner Kopfes 21c ein Werkzeug-Eingriffsglied, z. B. einen Innensechskant aufweisen, so daß der Zuganker 18c als Ganzes durch das Eingriffsglied 5c hindurch verstellt werden kann. Die Durchgangsbohrung des Zugankers 18c bildet einen Abschnitt des Fluidkanals 30c, der durch das Eingriffsglied 5c hindurch anzuschließen ist, sich im Abschnitt 16c bzw. im Halter 3c bis zur Werkzeugaufnahme 7c fortsetzt und im wesentlichen durchgehend in der Längsachse des Spanndornes 1c liegt. Bei dieser Ausführungsform ist der Abschnitt 13c gegenüber seiner Außenweite etwa um ein Drittel länger.

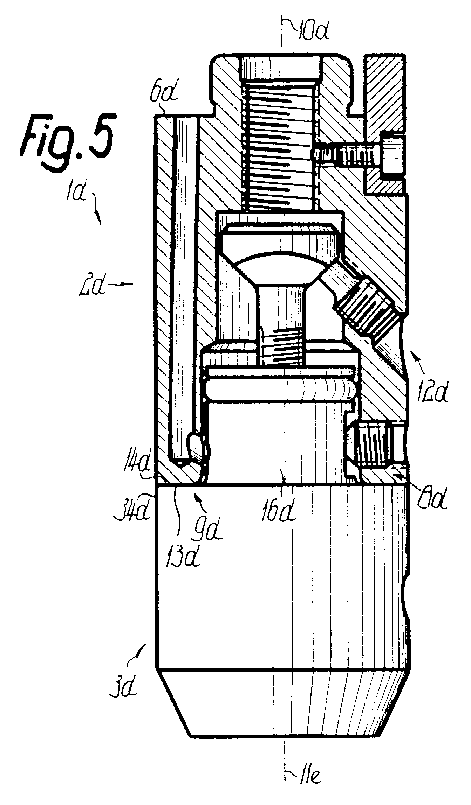

Gemäß Fig. 5 kann bei einem entsprechend Fig. 2 ausgebildeten Spanndorn 1d der Halter 3d auch eine Umfangsfläche 34d aufweisen, die von der Gleitfläche 14d bis zum vorderen verjüngten Ende mit konstanten Querschnitten durchgeht, z. B. zylindrisch ist, so daß sich von der Planfläche 6d bis zum verjüngten vorderen Ende eine ununterbrochen durchgehende Umfangsfläche ergibt. Bei den Ausführungsformen nach den Fig. 3 und 5 liegt der Axialabstand zwischen den Gewindebohrungen für die Spannglieder und die Stellglieder etwa in der Größenordnung von deren Durchmesser, während er bei der Ausführungsform nach Fig. 4 demgegenüber wesentlich größer sein kann.

Die Montage des Spanndornes ist sehr einfach, weil nach dem Zusammenstecken der Halter nur noch die vormontierten Spann- bzw. Stellschrauben festgezogen werden müssen. Nach deren Lockern kann der Halter 3 auch dann vom Halter 2 gelöst werden, wenn dieser an der Arbeitsspindel festgelegt bzw. betriebsbereit montiert ist. Alle Spannflächen und Gewinde können der Fluidführung ausgesetzt sein. Alle Bauteile und Anordnungen können jeweils nur einmal oder mindestens zweifach in gleicher oder unterschiedlicher Ausbildung vorgesehen sein, z. B. um mehrere Werkzeuge axial und/oder radial benachbart zu haltern.

## Patentansprüche

1. Werkzeug-Spanndorn für bearbeitend belastete Werkzeuge, wie Zerspanungswerkzeuge, dadurch gekennzeichnet, daß mindestens ein Spindel-Halter (2) zur Befestigung an einer Arbeitsspindel und wenigstens ein Werkzeug-Halter (3) zur Aufnahme mindestens eines Werkzeugeinsatzes vorgesehen sind, bzw. eine Längsachse (10, 11) als Drehachse für einen Rundlauf definieren und daß vorzugsweise die Längsachse (11) wenigstens eines Werkzeug-Halters (3) gegenüber der Längsachse (10) mindestens eines Spindel-Halters (2) zur Rundlauf-Justierung gegeneinander in mindestens einer Verstellrichtung verstellbar und/oder in der jeweiligen Stellung gegeneinander festsetzbar sind.

2. Spanndorn nach Anspruch 1, dadurch gekennzeichnet, daß mindestens zwei Halter (2, 3) im wesentlichen auschließlich achsparallel, insbesondere in allen Richtungen rechtwinklig zu ihren Längsachsen (10, 11), gegeneinander verstellbar bzw. gegen Relativbewegungen in allen anderen Richtung im Verstellzustand durch Führung (9) gesichert sind, daß vorzugsweise zur Verstellung in im wesentlichen allen Verstellrichtungen mindestens ein Stelltrieb (26), insbesondere wenigstens drei annähernd gleichmäßig verteilte bzw. jeweils im wesentlichen nur ein einziges Stellglied (27) aufweisende Stelltriebe (26), vorgesehen sind, und daß vorzugsweise der jeweilige Stelltrieb (26) innerhalb des Spindel-Halters (2), insbesondere unmittelbar benachbart zur Führung (9), an dem Werkzeug-Halter (3) angreift bzw. radial zur Längsachse (10, 11) gerichtet ist.

3. Spanndorn nach Anspruch 1 oder 2, dadurch gekennzeichnet, daß mindestens zwei Halter (2, 3) im wesentlichen durch gesonderte, insbesondere zerstörungsfrei trennbare, Bauteile gebildet sind, die vorzugsweise mit einem dem maximalen Verstellweg entsprechenden Spiel zentriert ineinandergreifen, verformungsfrei gegeneinander verstellbar und/oder über eine unter Druckspannung stehende Führung (9) gegeneinander abgestützt sind.

4. Spanndorn nach einem der vorhergehenden Ansprüche, dadurch gekennzeichnet, daß mindestens ein Werkzeug-Halter (3) in wenigstens einen Spindel-Halter (2) mit einem, insbesondere in der Außenweite reduzierten und/oder gegenüber einem vorstehenden Abschnitt höchstens gleich langen, Dorn-Abschnitt (16) eingreift, an dem ggf. mindestens ein Stelltrieb (26) angreift und daß vorzugsweise mindesens eine Führung (9) zwischen wenigstens zwei Haltern (2, 3) durch zwei ringförmig aneinandereliegende, plane Stirnflächen (13, 14) gebildet ist, die insbesondere im wesentlichen ganzflächig aneinander anliegen und/oder in deren Bereich beide Halter (2, 3) gleiche Außenweite haben, wobei eine Stirnfläche (13) vorzugsweise durch eine Endfläche des zugehörigen Halters (2) gebildet ist.

5. Spanndorn nach einem der vorhergehenden Ansprüche, dadurch gekennzeichnet, daß mindestens zwei Halter (2, 3) gegeneinander verdrehgesichert sind, wobei insbesondere eine Verdrehsicherung durch mindestens einen Stelltrieb (26) gebildet ist, der vorzugsweise an einer im wesentlichen planen Umfangsfläche (29) eines Halters (3) angreift und durch eine radial im anderen Halter gelagerte Druckschraube (27) gebildet ist.

6. Spanndorn nach einem der vorhergehenden Ansprüche, dadurch gekennzeichnet, daß mindestens zwei Halter (2, 3) miteinander, insbesondere axial und/oder nachstellbar, verspannt sind, wobei vorzugsweise eine Spanneinrichtung (12) im wesentlichen vollständig innerhalb des Außenumfanges wenigstens eines Halters (2, 3) liegt.

7. Spanndorn nach einem der vorhergehenden Ansprüche, dadurch gekennzeichnet, daß mindestens zwei Halter (2, 3) über wenigstens einen insbesondere etwa in ihrer Längsachse liegenden Zuganker (18) miteinander verbunden sind, der bevorzugt an einem Halter (3) befestigt ist und an dem mindestens ein gegenüber dem anderen Halter (2) abgestütztes Spannglied (22) angreift, bzw. mehrere über den Umfang verteilte Spannglieder (22) angreifen, und daß vorzugsweise ein Zuganker (18) gegenüber einem zugehörigen Halter (3) axial verstellbar ist, insbesondere mit einem Gewindeschaft (19) in eine Gewindebohrung dieses Halters (3) eingreift, wobei insbesondere ein Zuganker (18) einen innerhalb eines anderen Halters (2) liegenden erweiterten Kopf (21) mit wenigstens einer schrägen Druckfläche (20) aufweist, an dem ein zugehöriges, schräg zur Spannrichtung liegendes Spannglied (22) abgestützt ist.

8. Spanndorn nach einem der vorhergehenden Ansprüche, dadurch gekennzeichnet, daß wenigstens ein Stelltrieb (26) und mindestens ein Spannglied (22) in axial zueinander unmittelbar benachbarten Zonen liegen und insbesondere ein Spannglied (22) auf der von einer Führung (9) zwischen zwei Haltern (2, 3) abgekehrten Seite am selben Halter (2) wie ein Stelltrieb (26) gelagert ist.

9. Spanndorn nach einem der vorhergehenden Ansprüche, dadurch gekennzeichnet, daß zwischen mindestens zwei Haltern (2, 3) wenigstens eine, insbesondere durch eine Führung (9) gebildete, Fluid-Dichtung vorgesehen ist, die vorzugsweise von mindestens einem Fluidkanal (30b) durchsetzt ist und/oder mit Axialabstand benachbart zur Führung (9) liegt.

10. Spanndorn nach einem der vorhergehenden Ansprüche, dadurch gekennzeichnet, daß mindestens ein, insbesondere innerhalb wenigstens eines Halters (2b, 3b) liegender, Fluidkanal (30b) von einem Spindel-Halter (2b) zu einem Werkzeug-Halter (3b) führt bzw. zwei im Bereich einer Führung (9b) mit Kanalenden abgedichtet aneinanderschließende Kanalabschnitte (31b, 32b) aufweist und/oder daß ein Fluidkanal (30) quer zur Längsachse (10, 11) in einen Werkzeug-Halter (3), insbesondere in einen ringförmigen Raum eines Spindel-Halters (2) mündet, der an zwei Enden mit Gleit-Dichtungen (17) abgedichtet ist.
